Europäisches Patentamt

European Patent Office

Office européen des brevets

(19)

(11) Publication number: **0 016 582**
**B1**

# (12) EUROPEAN PATENT SPECIFICATION

(45) Date of publication of patent specification: **03.10.84**

(21) Application number: **80300671.7**

(22) Date of filing: **05.03.80**

(51) Int. Cl.³: **C 08 F 10/00**, C 08 F 4/64, C 08 F 4/02

(54) **Ziegler-type catalyst composition.**

(30) Priority: **07.03.79 US 18340**

(43) Date of publication of application:
**01.10.80 Bulletin 80/20**

(45) Publication of the grant of the patent:
**03.10.84 Bulletin 84/40**

(84) Designated Contracting States:
**BE DE FR GB IT NL**

(56) References cited:
**EP-A-0 004 481
DE-A-2 724 971
FR-A-2 396 769
GB-A-1 400 472**

(73) Proprietor: **Exxon Research and Engineering Company**
**P.O.Box 390 180 Park Avenue**
**Florham Park New Jersey 07932 (US)**

(72) Inventor: **Langer, Arthur Walter Jr.**
**175 Oakwood Road**
**Watchung New Jersey (US)**

(74) Representative: **Field, Roger Norton et al**
**ESSO Engineering (Europe) Ltd. Patents & Licences Apex Tower High Street**
**New Malden Surrey KT3 4DJ (GB)**

Courier Press, Leamington Spa, England.

# 0 016 582

**Description**

The present invention relates to catalyst systems for the conventional alpha olefin type polymerisation at significantly improved polymerisation activity, wherein the resultant polymers have a high degree of isotactic stereoregularity.

An object of the present invention is to provide improved catalyst systems having a major increase in polymerisation activity, e.g., for alpha-olefin polymerisations, which are able to control over a wide range the polymer crystallinity, e.g., isotacticity, so as to achieve a high degree of isotactic stereoregularity and a minimum amount of catalyst residues.

Another object of the present invention is to use directly the new improved catalyst with various types of supported transition metal compounds without substantial modification of the commercial catalyst preparation or the polymerisation plant.

Additionally, another object of the present invention is to provide a process and compositions whereby $R\,MR'_2$ or $R_2MR'$ are produced as cocatalysts *in situ* by the reactions:

$$R_2Mg + R'AlCl_2 \rightarrow R_2AlR' + MgCl_2, \quad \text{or}$$

$$RMgX + R'_2AlCl \rightarrow RAlR'_2 + MgXCl$$

According to this invention a catalyst composition comprises a mixture of:

(a) at least one alkyl metal compound having the formula $R'''_3M$, wherein M = Al, Ga or In, $R'''$ is a $C_1$ to $C_{20}$ primary alkyl or hydrogen or a mixture thereof, provided not more than one hydrogen atom is present,

(b) a titanium metal compound on a magnesium chloride support, said titanium metal compound being $TiCl_3$, $TiCl_4$, $TiBr_3$, $TiBr_4$ or a mixture thereof, the molar ratio of said $R'''_3M$ to said transition metal compound being 0.5:1 to 200:1; and

(c) at least one hindered Lewis base, said Lewis base being 2,2,6,6-tetramethylpiperidine, 2,2,5,5-tetramethylpyrrolidine, 2,2,5,5-tetramethyltetrahydrofuran, di-tert-butylketone, 2,6-di-isopropyl-piperidine, ortho-tolyl t-butylketone, methyl 2,6-di-tertbutyl-phenylketone, diisopropylethylamine, t-butyldimethylamine, 6-methyl-2-isopropyl pyridine, diphenylamine, di-ortho-tolylamine, N,N-diethylaniline or di-orthotolylketone.

Catalyst compositions similar to those of this invention are disclosed in Fr—A—2396769, but the alkyl metal compound has to be a hindered alkyl metal compound unlike those of the present invention which are unhindered.

A major cost involved in the polymerisation of the alpha olefins is the cost of the catalyst components. Therefore, the cost of the manufacture of the polymer can be effectively reduced by the use of catalyst systems having a higher polymerisation activity. A further concern is the ability to produce polymers having a minimum amount of catalyst residues thereby eliminating a costly deashing operation. A still further concern is the ability to produce polymers having a high degree of isotactic stereoregularity thereby enabling the manufacturer to eliminate or reduce the costly operation involving the removal and separation of atactic polymer from the isotactic polymer. The improved catalyst system of the present invention provides a means for the manufacturer to obtain these desirable realisations.

The improved catalyst systems of the present invention which are employed in alpha olefin polymerizations include a titanium chloride or bromide supported on magnesium chloride, one or more hindered Lewis bases and at least one metal alkyl compound of Al, Ga or In.

The titanium metal catalyst compound is a chloride or bromide and the transition metal halide is in the form of solid crystalline compounds, solid solutions or compositions with other metal salts supported on magnesium chloride. For highest stereospecificity it is desirable to have the transition metal halide, or its support composition, in the layer lattice structure with very small crystallites, high surface area, or sufficient defects or foreign components to facilitate high dispersion during polymerization. The titanium halide may also contain various additives such as Lewis bases, pi bases, polymers or organic or inorganic modifiers. The titanium halides are $TiCl_3$, $TiCl_4$, $TiBr_3$ or $TiBr_4$ preferably $TiCl_3$ or $TiCl_4$ or mixtures thereof. The most preferred $TiCl_3$ compounds are those which contain $TiCl_4$ edge sites on a layer lattice support such as alpha, delta, or gamma $TiCl_3$ or various structures and modifications of $TiCl_3$, $MgCl_2$ or other inorganic compounds having similar layer lattice structures. The most preferred titanium compound is supported on a magnesium chloride layer lattice.

Other anions may be also present, such as other halides, pseudo-halides, alkoxides, hydroxides, oxides or carboxylates, etc., providing that sufficient chloride is available for isospecific site formation. Mixed salts or double salts such as $K_2TiCl_6$ or $MgTiCl_6$ can be employed alone or in combination with electron donor compounds. The most preferred transition metal compound is $TiCl_4$ containing $MgCl_2$ especially in the presence of Lewis bases (electron donor compounds).

The Lewis base is employed in combination with the trialkyl metal compounds and the titanium metal compounds are those that do not cause excessive cleavage of metal-carbon bonds or loss of active sites.

2

The hindered Lewis bases are those whose complexing ability towards the cocatalyst is hindered sufficiently by steric and/or electronic effects to cause appreciable dissociation of the trialkyl metal-Lewis base complex under polymerization conditions. Although a wide range of mole ratios may be used, dissociation measured on a 1:1 complex is normally in the range of 5—95%, preferably greater than 10% and less than 90%. Steric hinderance is achieved by bulky substituents around the heteroatom which reduces the accessibility of the base functionality to the Lewis acid, that is, the trialkyl metal compound. Electronic hindering is obtained by placing electron withdrawing substituents on the heteroatom to reduce the electron density on the basic heteroatom. Aromatic substituents are especially useful because they are relatively unreactive toward other catalyst components. Hindered Lewis bases derived from piperidines, pyrrolidines, ketones, tetrahydrofurans, secondary and tertiary aromatic amines and and tertiary aliphatic amines are preferred, with the hindered nitrogen bases being most preferred.

The hindered Lewis bases which are suitable are defined as the sterically hindered bases 2,2,6,6-tetramethylpiperidine, 2,2,5,5-tetramethylpyrrolidine, 2,2,5,5-tetramethyltetrahydrofuran, di-tert-butylketone, 2,6-di-isopropyl-piperidine, ortho-tolyl t-butylketone, methyl 2,6-di-tert-butylphenyl-ketone, diisopropylethylamine, t-butyl-dimethylamine or 6-methyl-2-isopropyl pyridine or the electronically hindered bases diphenylamine, di-ortho-tolylamine, N,N-diethylaniline or di-orthotolylketone. Since aromatic substituents are also bulky, some of the electronically hindered bases also have a steric contribution to the hinderance. Especially preferred hindered amines are 2,2,6,6-tetramethylpiperidine, 2,2,5,5-tetramethylpyrrolidine and the diarylamines. Completely hindered bases, such as 2,6-di-tertiary-butylpyridine, which complex the alkyl metal cocatalyst too weakly, are ineffective for improving stereospecificity and are excluded for this invention.

Salts of Group IA-IIIB metals may also be employed with the present catalysts if they are partially or wholly solubilised by reaction with the alkyl metal components. Particularly useful are the carboxylates, alkoxides and aryloxides of magnesium and aluminium. Examples include $Mg(OOCR'')_2$, $R''MgOOCR''$, $ClMgOR''$, $Mg(OR'')_2$, $R''_2AlOOCC_6H_5$, $R''Al(OOCR'')_2$ and $R''_2AlOR''$ where R is a hydrocarbyl group. Most preferred are the alkoxide and carboxylate salts of magnesium and aluminium prepared *in situ* by reacting the organometal compounds with $R''OH$ or carboxylic acids in hydrocarbon solvents. Sterically hindered alkoxides and aryloxides are especially preferred, where $R'' = $ t-butyl, t-amyl, 1.1-diethylpropyl, 1,1-diethylbenzyl, 2,6-di-tert-butylphenyl, 1,1-diphenylpropyl or triphenylmethyl. The trialkyl metal compounds are those having the formula $R'''_3M$ wherein $M = $ Al, Ga or In, and $R'''$ is a $C_1$—$C_{20}$ primary alkyl or hydrogen or a mixture thereof provided not more than one hydrogen atom is present. Preferably there is at least one alkyl group having at least two carbon atoms and more preferably having 2 to 4 carbon atoms. The salt of the Group IA—IIIB metal when used is used at a molar ratio of 1 to 50 to 50 to 1 moles per mole of the trialkylaluminium compound $R''_3Al$, and preferably at 1 to 10 to 10 to 1 moles when the oxygen-containing group is alkoxide or aryloxide. When the group is carboxylate, the ratio is 0.1 to 1, preferably 0.1 to 0.5 carboxylate groups per mole of the compound $R'''_3M$. The use of these group IA—IIIB metal salts is preferably with the supported titanium catalyst systems as embodied in the present invention.

For the alkyl metal cocatalysts of this invention, the most preferred transition metal compounds contain $TiCl_4$ supported on $MgCl_2$ and one or more Lewis bases. The concentration of the transition metal in the polymerization zone is 0.001 to 5mM, preferably less than 0.1mM.

The molar ratio of the trialkyl metal compound $R'''_3M$ to the transition metal compound is 0.5:1 to 200:1 more preferably 5:1 to 100:1. The molar ratio of Lewis base to compound $R'''_3M$ can vary widely but is preferably 0.1:1 to 1:1. However, the hindered Lewis bases may be added in greater than equimolar amounts, from 0.1 to 1 to 10 to 1 moles per mole of compound $R_3'''M$ to obtain higher stereospecificity without a major loss of activity which would occur with unhindered bases.

Surprisingly, it has been found that the Group IA-IIIB salts may be omitted when a hindered Lewis base is used together with the trialkyl metal cocatalyst. Both high activity and high stereospecificity are obtained when the Lewis base is sufficiently hindered to prevent poisoning the stereospecific catalyst sites. In such cases, an excess of the hindered base over the alkyl metal cocatalyst still produces high activity, whereas an excess of the less hindered bases completely kills the catalyst. The desired steric hindrance is the same as defined above for dissociation from the trialkyl metal compound. In this system, the less hindered trialkyl metal compounds are preferred $(MR'_3)$.

The catalyst system of the invention enables the process for making alpha olefin polymers having a high degree of isotactic stereoregularity to be carried out at a temperature of 25° to 150°C, more preferably 40° to 80°C, at pressures of 1 atm. to 50 atm. The reaction time for polymerization is 0.1 to 10 hours, more preferably 0.5 to 3 hours. Due to the high catalyst activity, shorter times and temperatures below 80°C can be readily employed.

The reaction solvent for the system can be any inert paraffinic, naphthenic or aromatic hydrocarbon such as benzene, toluene, xylene, propane, butane, pentane, hexane, heptane, cyclohexane, and mixtures thereof. Preferably, excess liquid monomer is used as solvent. Gas phase polymerizations may also be carried out with or without minor amounts of solvent.

Typical examples of $C_2$—$C_{20}$ alpha olefinic monomers employed in the present invention for the manufacture of homo-, co- and terpolymers are ethylene, propylene, butene-1, pentene-1, hexene-1,

0016582

octadecene-1, 3-methylbutene-1, styrene, ethylidene norbornene, 1,5-hexadiene and mixtures thereof. Isotactic polymerization of propylene and higher olefins is especially preferred, including block copolymerizations with ethylene.

The trialkyl metal compound and the supported transition metal compound can be added separately to the reactor or premixed before addition to the reactor, but are preferably added separately. Replacing the secondary or tertiary alkyl groups by bulky or hindered alkoxy, phenoxy or dialkylamide groups does not provide the improved catalyst activity achieved by the cocatalyst in this invention.

The advantages of the catalyst system and the process for the alpha olefin polymerizations of the present invention can be more readily appreciated by reference to the following Examples and tables.

## Example 1

5 moles $MgCl_2$ were ball milled with 1 mole ethylbenzoate for one day, adding 1 mole $TiCl_4$ and milling 3 days, then treating with neat $TiCl_4$ at 80°C for 2 hours, washing with heptane and vacuum dried. The catalyst contained 3.38% Ti.

Polymerizations were carried out using 1 mmole triethyl aluminium and 0.2 g of the supported $TiCl_4$ catalyst and a hindered base.

Propylene was polymerised in 500 ml n-heptane at 65°C, 1 hour at 765—770 mm. Polymerisation rate was 130 g/g catalyst/hour and the polymer insoluble in boiling heptane = 97.6%.

For comparison purposes an unhindered base was also used.

TABLE I

| Run | Mmoles AlEt₃ | Mmoles Hindered Base | Rate | % HI |
|---|---|---|---|---|
| A | 1 | 2 Tetramethyl THF (1) | 277 | 94.1 |
| B | 1 | 1 Tetramethylpiperidine (2) | 402 | 95.5 |
| C | 1 | 2 i Pr₂NEt | 289 | 95.3 |
| D | 1 | 1 Di-tolylamine | 309 | 93.4 |
| | | Mmoles Unhindered Base | | |
| Control | 1 | 1 MeOt-Bu | 129 | 91.3 |
| Control | 1 | 1 Met-BuNH | 11 | 95.5 |
| Control | 1 | 1.06 Et₃N | 38 | 97.0 |
| Control | 1 | 1 2,6-Di-t-butylpyridine | 487 | 84.8 |

(1) 2,2,5,5-tetramethyltetrahydrofuran
(2) 2,2,6,6-tetramethylpiperidine

It can be seen that the hindered bases (Runs A—D) gave both high activity and high HI (heptane insolubles — a measure of stereospecificity), whereas the control runs with unhindered bases gave improved HI but with a series loss of activity. The completely hindered 2,6-di-t-butylpyridine had little effect on either rate or HI.

## Example 2

The procedure of Example 1 was followed except that the supported $TiCl_4$ contained 3.16% Ti catalyst.

4

TABLE II

| Run | Mmoles AIR₃ | Mmoles Hindered Base | Rate | % HI |
|---|---|---|---|---|
| E | 1 AlEt₃ | 1 Diphenylamine | 233 | 95.6 |
| F | 1 AlEt₃ | 2 Tetramethylpiperidine | 292 | 97.1 |
| G | 1 sBu₂AlEt | 1 Tetramethylpiperidine | 302 · | 95.0 |
| H | 1 i Bu₃Al | 1 Tetramethylpiperidine | 423 | 97.1 |
| | | Mmoles Unhindered Base | | |
| Control | 1 sBu₂AlEt | 1 2,6-Dimethylpiperidine | 4 | 85.4 |
| Control | 1 AlEt₃ | 1 Ethylbenzoate | 0 | — |
| Control | 5 AlEt₃ | 4 Tetrahydrofuran | 100 | 83.0 |

It can be seen that the hindered bases gave both high activity and high HI, whereas the unhindered bases gave both low activity and HI.

**Claims**

1. A catalyst composition which comprises a mixture of:
(a) at least one alkyl metal compound having the formula $R'''_3M$, wherein M = Al, Ga or In, $R'''$ is a $C_1$ to $C_{20}$ primary alkyl or hydrogen or a mixture thereof, provided not more than one hydrogen atom is present;
(b) a titanium metal compound on a magnesium chloride support, said titanium metal compound being $TiCl_3$, $TiCl_4$, $TiBr_3$, $TiBr_4$ or a mixture thereof, the molar ratio of said $R'''_3M$ to said transition metal compound being 0.5:1 to 200:1;
(c) at least one hindered Lewis base, said Lewis base being 2,2,6,6-tetramethylpiperidine, 2,2,5,5-tetramethylpyrrolidine, 2,2,5,5-tetramethyltetrahydrofuran, di-tert-butylketone, 2,6-di-isopropyl-piperidine, ortho-tolyl t-butylketone, methyl 2,6-di-tert butyl-phenylketone, diisopropylethylamine, t-butyldimethylamine, 6-methyl-2-isopropyl pyridine, diphenylamine, di-ortho-tolylamine, N,N-diethylaniline or di-orthotolylketone.
2. A composition according to claim 1 wherein said titanium compound is $TiCl_4$ or $TiCl_3$.
3. A composition according to any one of the preceding claims wherein said $R_3'''M$ contains at least one of said alkyl groups having 2 to 4 carbon atoms.

**Patentansprüche**

1. Katalysatorzusammensetzung gekennzeichnet durch eine Mischung aus:
(a) mindestens einer Alkylmetallverbindung mit der Formel $R'''_3M$, in der M = Al, Ga oder In ist, $R'''$ ein primärer $C_1$—$C_{20}$-Alkylrest oder Wasserstoff oder eine Mischung derselben mit der Maßgabe ist, daß nicht mehr als ein Wasserstoffatom vorhanden ist;
(b) einer Titanmetallverbindung auf einem Magnesiumchloridträger, wobei die Titanmetallverbindung $TiCl_3$, $TiCl_4$, $TiBr_3$, $TiBr_4$ oder eine Mischung derselben ist und das Molverhältnis von $R'''_3M$ zu der Übergangsmetallverbindung 0,5:1 bis 200:1 beträgt;
(c) mindestens einer gehinderten Lewisbase, wobei die Lewisbase 2,2,6,6-Tetramethylpiperidin, 2,2,5,5-Tetramethylpyrrolidin, 2,2,5,5-Tetramethyltetrahydrofuran, Di-tert.-butylketon, 2,6-Diisopropylpiperidin, ortho-Tolyl-t-butylketon, Methyl-2,6-di-tert.-butylphenylketon, Di-isopropylethylamin, t-Butyldimethylamin, 6-Methyl-2-isopropylpyridin, Diphenylamin, Di-ortho-tolylamin, N,N-Diethylanilin oder Di-orthotolylketon ist.
2. Zusammensetzung nach Anspruch 1, dadurch gekennzeichnet, daß die Titanverbindung $TiCl_4$ oder $TiCl_3$ ist.
3. Zusammensetzung nach einem der vorangehenden Ansprüche, dadurch gekennzeichnet, daß $R'''_3M$ mindestens einen der Alkylreste enhält, der 2 bis 4 Kohlenstoffatome aufweist.

**Revendications**

1. Une composition de catalyseur, qui comprend un mélange de:
(a) au moins un composé de type métal alkyle répondant à la formule $R'''_3M$, dans laquelle M

égale Al, Ga ou In, R''' est un groupe alkyle primaire en $C_1$ à $C_{20}$ ou l'hydrogène ou un de leurs mélanges, à la condition qu'il n'y ait pas présence de plus d'un atome d'hydrogène;

(b) un composé du métal titane sur un support en chlorure de magnésium, ledit composé du métal titane étant $TiCl_3$, $TiCl_4$, $TiBr_3$, $TiBr_4$ ou un de leurs mélanges, le rapport molaire dudit $R'''_3M$ audit composé de métal de transition étant compris entre 0,5:1 et 200:1;

(c) au moins une base de Lewis présentant de l'empêchement, ladite base étant la tétraméthyl-2,2,6,6-pipéridine, la tétraméthyl-2,2,5,5-pyrrolidine, le tétraméthyl-2,2,5,5-tétrahydrofuranne, la di-tertiobutyl-cétone, la diisopropyl-2,6-pipéridine, l'ortho-tolyl t-butylcétone, la méthyl di-tertiobutyl-2,6 phénylcétone, la diisopropyléthylamine, la t-butyldiméthylamine, la méthyl-6 isopropyl-2 pyridine, la diphénylamine, la di-ortho-tolyl-amine, la N,N-diéthylaniline, ou la di-orthotolylcétone.

2. Une composition selon la revendication 1, dans laquelle ledit composé de titane est $TiCl_4$ ou $TiCl_3$.

3. Une composition selon l'une quelconque des revendications précédentes, dans laquelle ledit $R'''_3M$ contient au moins un desdits groupes alkyles ayant 2 à 4 atomes de carbone.